(19) Europäisches Patentamt
European Patent Office
Office européen des brevets

(11) Publication number: **0 196 359**
**B1**

(12) **EUROPEAN PATENT SPECIFICATION**

(45) Date of publication of patent specification: **08.11.89**

(51) Int. Cl.$^4$: **C 21 B 13/00**

(21) Application number: **85111434.8**

(22) Date of filing: **12.09.85**

(54) **Method and apparatus for fluidized bed reduction of iron ore.**

(30) Priority: **12.09.84 JP 191330/84**

(43) Date of publication of application:
**08.10.86 Bulletin 86/41**

(45) Publication of the grant of the patent:
**08.11.89 Bulletin 89/45**

(84) Designated Contracting States:
**DE SE**

(56) References cited:
**EP-A-0 054 926**
**FR-A-2 143 852**
**GB-A- 901 783**
**US-A-2 988 442**
**PATENTS ABSTRACTS OF JAPAN, vol. 7, no. 114 (C-166)1259r, 18th May 1983; & JP - A - 58 34 113**
**SOVIET INVENTIONS ILLUSTRATED, week 8519, 19th June 1985, Derwent Publications, London, GB; SU - A - 383 147 (BELOUSOV I.G.) 15-10-1984**

(73) Proprietor: **KABUSHIKI KAISHA KOBE SEIKO SHO**
**3-18 Wakinohama-cho 1-chome Chuo-ku**
**Kobe 651 (JP)**

(72) Inventor: **Saeki, Osamu**
**8-11-15, Uenodori**
**Nada-ku, Kobe (JP)**
Inventor: **Mori, Kenji**
**4-3-15, Takaodori**
**Nada-ku, Kobe (JP)**
Inventor: **Onoda, Mamoru**
**1-14-8, Midorigaoka-cho Higashi**
**Miki, Hyogo-ken (JP)**
Inventor: **Watanabe, Ryo**
**500-21, Arima-cho, Kita-ku**
**Kobe (JP)**
Inventor: **Shinohara, Katsufumi**
**2-35, Tomogaoka, Suma-ku**
**Kobe (JP)**
Inventor: **Ashie, Takehiko**
**7-3-4, Takamaru, Tarumi-ku**
**Kobe (JP)**
Inventor: **Imanishi, Nobuyuki**
**1-18-5, Izumidai, Kita-ku**
**Kobe (JP)**

(74) Representative: **Thomsen, Dieter, Dr.rer.nat.**
**Kaiser-Ludwig-Platz 6**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 196 359 B1**

## Description

The present invention relates to a method for making iron by fluidized bed reduction of iron ore according to the preamble of claim 1 and to the corresponding apparatus for performing the method.

The production of iron and steel mainly depends on the method of using a blast furnace and converter; the iron ore powder has to be preprocessed into an agglomerate in the form of pellets or briquets. In such an iron making process a large quantity of coke is used and therefore a coke oven has to be provided, and in addition large-scaled equipment and a material storing yard and the like are required. A particular selection of raw coal is also necessary to produce the necessary high quality coke usable for the blast furnace.

In view of these drawbacks the direct reduction of the iron ore by using fluidized beds has been developed and put into practical use. This method uses a reducing gas which is obtained by reforming of natural gas. However, there is a heavy problem in the direct reduction of iron ore within a fluidized bed, i.e. relating to the sticking of the iron ore. This means, the iron ore particles are agglomerated into larger granules so that the fluidization cannot continue. In order to overcome this disadvantage the operation temperature has to be held below 800°C; this, however, results in the long run in a reduction of the velocity.

In order to prevent the iron ore sticking the following other means have been proposed in the past:

(1) Usage of coarse iron powder,

(2) agitation of the interior of a fluidized bed reactor by using a mechanical agitator,

(3) addition of coke powder to the fluidized bed reactor and mixing it with the contents thereof,

(4) coating the iron ore particles with nonferrous oxides such as MgO or CaO.

These methods have been found to be considerably effective in an experimental stage. However, employment of these methods for practical use poses problems in that the first method leads to additional cost for adjustment of grain size and at the same time the reaction velocity is reduced. In the second method the agitator wears out due to the high temperatures and at the same time the required seals are complicated. In the third method large quantities of coke powder are consumed and at the same time the coke powder shows tendencies to separate from the iron ore due to the differences of specific gravity. As to the last method a complete coating of the iron ore particles is difficult to obtain while at the same time this mode of production increases considerably the technical and economical expenditure.

To prevent the sticking in the fluidized bed reduction there is another method in which iron ore and coal are mixed within the fluidized bed reactor. However, in using such a method the problem arises that the ash contained in the coal has to be removed before introducing the coal into the fluidized bed in order to lessen the problems in conjunction with the necessity of a magnetic separation of gang as originating from the ash contents in the coal.

A fluidized bed reduction is described in EP—A—54 926, i.e. a process for concurrently carrying out production of reduced iron and thermal cracking of a heavy oil with the steps of (a) introducing a fine iron ore and a heavy oil into a fluidized bed thermal cracking reactor to effect thermal cracking of the heavy oil into products of thermal cracking and carbonaceous by-product material which is deposited on the particles of the fine iron ore, (b) introducing the fine iron ore with deposits of said carbonaceous material formed in the step (a) into a first fluidized-bed reducing furnace and contacting a reducing gas at high temperature blown thereinto in a fluidized state to reduce the fine iron ore into reduced iron and to form an exhaust gas, (c) separating a cracked gas, light oil and residual oil by distillation from said products of thermal cracking formed in the step (a) in a fractionation system, (d) reforming the cracked gas or the residual oil by distillation in a gas reformer into a reducing gas mainly composed of hydrogen and carbon monoxide, and (e) blowing the reducing gas into the fluidized-bed reducing furnace.

Furthermore coal can be transformed by pyrolysis in a fluidized bed reactor into gas from which a carbonaceous material deposits on iron ore particles when the gas passes through a fluidized layer of iron ore particles.

GB—PS 901 783 describes a process for the production of coke breeze from fine coal by carbonization in a fluidized bed, with the steps of carbonizing the fine coal in a fluidized bed through which a mixture of air and combustible gas is fed from below to cause the fluidization and carbonization of the fine coal in the bed and passing the gases leaving the fluidized bed, through a metal oxide layer located above the fluidized bed prior to the gases being discharged from the vessel in which the carbonization has taken place.

These prior art techniques have, of course, in each case their own problems and limitations. Thus the oil as base material has a particular behaviour originating from the natural sources and the impurities with respect to other elements and compounds, e. g. sulfur etc. Furthermore the fluidization of coal cannot directly be transformed and adapted to iron making processes as arises from the many particular parameters of iron making processes and/or from the composition of the coal materials.

The object of the present invention is to provide a direct reduction method for making iron out of iron ore with advantageous yields and purity wherein use is made of the advantages of the implementation in a fluidized bed so that not only the sticking is avoided, but also the by-products of the method are used optimally and dependence upon the petroleum and heavy oil and its vari-

•ations of the chemical compositions is excluded so that the production of iron at relatively low costs and reduced amounts of energy, without any danger of the occurence of iron ore sticking, is allowed.

According to the invention this object is solved by the features of the present claim 1. Preferred embodiments are described in claims 2 to II.

An apparatus for performing the method of the invention is specified in claim 12.

The present invention provides a method which prevents the occurence of sticking in the high temperature fluidized bed reducing furnace; at the same time it supplies char to the smelt reduction furnace (gas generating apparatus), thus improving the quality of gas which can be used for the fluidized bed reduction; consequently the efficiency of the reduction process is considerably enhanced.

Brief Description of the Drawings

Figure 1 is a graph showing the relationship between the reduction time and the degree of reduction at several different temperature levels;

Figure 2 shows the relationship between the reduction time and the degree of reduction at different levels of carbon deposited on the iron ore;

Figure 3 shows the relationship between the reduction time and the degree of reduction at several different pressure levels within the fluidized bed reducing reactor;

Figure 4 is a graph showing the relationship between the thermal cracking temperature and the amount of carbon deposited on iron ore particles; and

Figure 5 is a schematic flow sheet showing an example of the present invention.

According to the present invention, a small quantity of carbon is deposited on the surface of particles of iron ore; this material is subjected to fluidized bed reduction in a separate reactor, i.e. in a fluidized bed reducing thermal reactor. Thus the iron ore in the form of particles and with the carbon deposited thereon as described is subjected to fluidized bed reduction, where even if the reduction temperature is increased, no sticking occurs. Consequently the reduction can proceed efficiently under the controlled fluidization.

In the case of figure 1 iron ore is not coated with carbon; it is subjected to fluidized bed reduction; the reaction temperature is set to 850°C; then sticking occurs when the degree of reduction reaches approximately 40%; thus the fluidization is stopped and reduction of iron ore can no longer proceed. The upper limit of reduction temperature where more than 90% of reduction degree is obtained without sticking is approximately 800°C. Furthermore it takes a long time, i.e. about 60 minutes, until the degree of reduction reaches 90% at such a low reaction temperature; consequently there is only a low degree of productivity.

According to figure 2 carbon is deposited in an amount of approximately 4% on the granular iron ore particles; even if the temperature of the fluidized bed reduction is increased up to 900°C or more, no sticking occurs; thus the rate of reduction can be increased, and a degree of reduction of approximately 90% is obtained within only about 25 minutes.

Figure 3 shows data from a fluidized bed reduction where the rate of reduction can be further increased by enhancing the pressure within the fluidized bed reducing reactor; carbon is coated on iron ore (with a particular deposition degree); the time required to reach 90% degree of reduction is lessened further; it is about 15 minutes.

The temperature of the gas, which is produced in the smelt reducing furnace and comprises $CO_2$, and $H_2O$ in addition to CO, and the composition of such a gas are not suitable for the reduction step. Thus the quality of the said gas will be improved in that hydrocarbon gas from the preceding processing step (fluidized bed cracking and coating reactor) is introduced and mixed with the gas from the gas generating apparatus (smelt reduction furnace); the composition of gas is improved by the reaction between hydrocarbon and $CO_2$ plus $H_2O$ as is contained in the gas from the gas generating apparatus. At the same time the gas temperature is decreased by the endothermic reaction as described. The improved quality of the gas is suitable for the reduction step. Alternatively hydrocarbon from the preceding processing step is subjected to steam reforming (conversion into CO and $H_2$); this converted gas mixture is provided to be mixed with the gas from the gas generating apparatus in order to obtain also a similarily suitable reducing gas.

Within the present invention the first reactor, i.e. the fluidized bed reactor for pyrolysis of coal is operated at a temperature in the range of 450 to 700°C, preferably 500 to 600°C. The second reactor is the fluidized bed coating and cracking reactor for thermal cracking of gas and hydrocarbon and depositing the carbon on the surface of iron ore particles; the operating temperature is in the range of 450 to 850°C (see figure 4), preferably 650 to 800°C and more preferably 700 to 775°C which is optimum.

The third reactor is the fluidized bed reducing reactor for reduction of iron ore; practically the temperature is in the range from 800 to 1100°C; the optimal temperature is from 850 to 950°C; thus the rate of reduction is improved in order to prevent sticking. Within these temperature ranges the practical operating pressure is in the range of 0 to 7 bar; see figure 3. The optimal pressure in order to improve the rate of reduction is 3 to 5 bar.

In practising the present invention the first reactor, i.e. the fluidized bed pyrolysing reactor is arranged preceding to the second reactor, i.e. the fluidized bed cracking and coating reactor; thus the hydrocarbons produced in the fluidized bed pyrolysing reactor are charged into the fluidized bed cracking and coating reactor; into this reactor also the iron ore powder or the same in the form of particles is charged; the components are mutually contacted for thermal cracking of hydrocarbon under fluidization conditions. By this mode the carbonaceous material is uniformly deposited on the particles of iron ore and cover it, and consequently the sticking during the fluidized bed reduction is effectively prevented. The quantity of carbonaceous material deposited on the surface of iron ore is not especially limited; but experiments show that 2 to 10 weight percent, preferably 3,5 to 5 weight percent are preferred in order to suitably prevent the sticking.

The method for using of coal in the fluidized bed reduction of iron ore is known in principle; see JP-Patent Application No. 48622/79, according to which coal and iron ore are introduced into a fluidized bed reducing furnace in order to get direct contact between iron ore and coal and thus prevent sticking. This method is practised in such a form that carbonaceous material (coal or coke) is directly mixed with iron ore in the fluidized bed reducing furnace.

According to the present invention, however, and as described above the coal is treated by pyrolysis in a separate fluidized bed pyrolysing reactor, i.e. prior to the fluidized bed reduction; thus gas and tar are produced mainly composed of hydrocarbon, and furthermore char is produced; the gas and tar are passed to the thermal cracking step where carbonaceous material which is formed is deposited on the surface of the iron ore. The gas produced in this thermal cracking step, which is rich in hydrocarbons, is mixed with the gas from the gas generating apparatus (smelt reduction furnace), and an improved quality of mixed gas results by combining with this gas from the gas generating apparatus. On the other hand the gas produced by thermal cracking can be converted by steam-reforming; the resultant gas rich in $H_2$ and CO is then mixed with the gas from the gas generating apparatus to provide a temperature and composition suitable for reduction; the carbon coated iron ore is then reduced in a reducing furnace (fluid bed reducing reactor) using this gas as a reducing agent. The mode of the present invention results in particular advantages by the step that char produced during the pyrolysis of coal is supplied as a carbon source to the gas generating apparatus.

The present invention will be described furthermore by the following two examples.

## Example 1

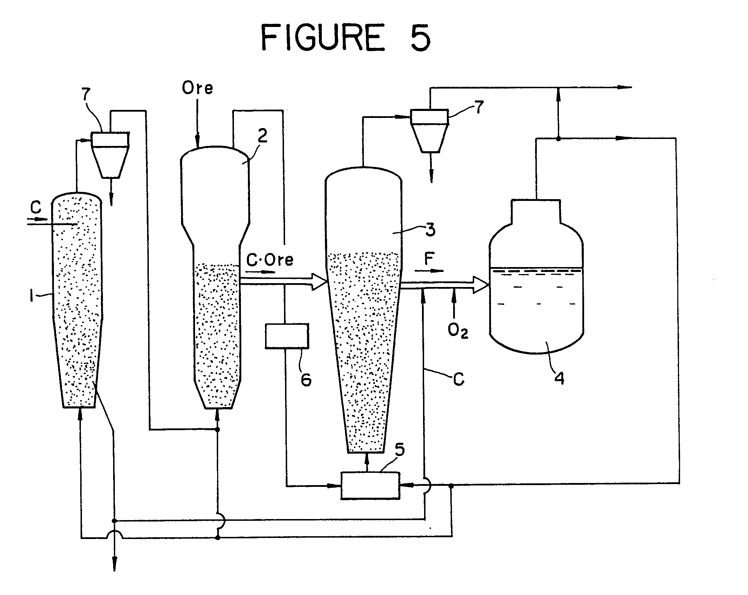

Figure 5 illustrates an example of a flow for the fluidized bed reduction in accordance with the present invention. Reference numeral 1 designates a fluidized bed pyrolysing reactor, 2 a fluidized bed cracking and coating reactor wherein tar and gas are thermally cracked, 3 a fluidized bed reducing reactor, 4 a smelt reduction furnace which serves also as an apparatus for generating of reducing gas; 5 is a mixer for upgrading the gases; 6 is a steam reforming unit; 7 is a cyclone.

In a practical process flow 0,86 t/d of pulverized coal is supplied to the reactor 1 and subjected to pyrolysis at 580°C. The produced gas and tar is supplied to the reactor 2 (fluidized bed tar and gas thermal cracking furnace). 1,6 t/d of iron ore powder is supplied to and fluidized in the reactor 2 (fluidized bed tar and gas thermal cracking furnace); the gas and tar supplied from the reactor 1 (fluidized bed pyrolysing furnace) is subjected to thermal cracking at 750°C in order to generate a gas rich in light hydrocarbons and containing hydrocarbon vapor. The coke produced by the thermal cracking of the gas and tar is deposited on the surface of iron ore and at the same time the iron ore is reduced to magnetite from hematite.

In the reactor I (fluidized bed pyrolysing furnace) the coal is converted to tar, gas and char.

The char is fed to the smelt reduction furnace 4 which serves also as a reduction gas generating apparatus. The furnace is operated at about 1.580°C.

The tar and the hydrocarbons generated from the thermal cracking reactor are reformed into CO and $H_2$ in the steam reformer 6; in the mixer 5 the products are mixed with the reduced gases as produced in the smelt reduction furnace; these mixed gases are controlled with respect to temperature and composition; the mixture is supplied to the fluidized bed reducing reactor 3. The iron ore coated with coke which is produced in the fluidized bed reactor 2 (tar and gas thermal cracking furnace) is fed to the fluidized bed reducing reactor 3 and reduced by the reducing gas fed from the mixer 5. The fluidized bed reducing reactor 3 is operated at 850°C; the degree of reduction of iron ore is 70%.

1,03 t/d of molten iron and 0,18 t/d of slag are produced by the smelt reduction furnace 4.

## Example 2

According to the flow sheet of figure 5 the gas containing hydrocarbons as produced in the reactor 2 (tar and gas thermal cracking furnace) is mixed with the gas generated in the smelt reduction furnace 4; however, in this embodiment it is passed not through the steam reformer 6; the mixing is effected in the mixer 5 where the mixed gas is improved and controlled in temperature and composition. Similar to Example 1 0,86 t/d of coal is supplied to the fluidized bed pyrolysing reactor 1; the gas with the hydrocarbons as produced in the reactor 2 (tar and gas thermal cracking furnace) contains 0,186 t/d of carbon and 0,03 t/d of hydrogen and it is mixed with the reduced gas at 1.500°C produced in the smelt reduction furnace 4 (composition comprising CO 67%, $H_2$ 17%, $CO_2$ 7,5% and $H_20$ 7,4%); as a result thereof the quality-improved gas has a temperature of 970°C and the gas composition comprises CO 58%, $H_2$ 28%, $CO_2$ 6%, $H_20$ 2% and $CH_4$ 6%.

Further in the reactor 1 the volatile portion of the char which is obtained by the pyrolysis of coal is lowered from 40% to 10% and the solid carbon portion is increased from 52% to 72%; as a result the char can be supplied as carbon of high quality carbonaceous material for melt reduction to the smelt reduction furnace 4 wherein a reduced gas is produced comprising a composition of CO 67%, $H_2$ 17%, $CO_2$ 7,5% and $H_2O$ 7,4%; as a result of the following mixing step (see above) the reducing gas is at a temperature of 970°C, and the gas composition comprises CO 58%, $H_2$ 28%, $CO_2$ 6%, $H_2O$ 2% and $CH_4$ 6%.

The surprising advantages of the present invention result i. a. from the fact that carbonaceous material is deposited on the surface of iron ore powder prior to reduction in the fluidized bed; even if the reduction temperature increases, the sticking of the coated iron ore will be avoided effectively. At the same time a reducing gas mixture, suitable for the reduction, is produced by mixing the gaseous products obtained by pyrolysis of coal and gases produced in the gas generating apparatus in which char produced by pyrolysis of coal is used; thus the fluidized bed reduction is continuously implemented with high reaction efficiency.

**Claims**

1. Method for making iron by fluidized bed reduction of iron ore by means of hydrocarbons, in which the hydrocarbons are cracked and thereby formed carbonaceous materials are deposited on the surface of powder particles of the iron ore within a fluidized bed reactor (2) while within another fluidized bed reactor (3) the coated iron ore powder particles are reduced by means of a reducing agent in form of a gas, characterized in that there is provided still another fluidized bed reactor (1) in which coal is pyrolysed thereby forming gaseous products, which are fed into the fluidized bed cracking and coating reactor (2) and in that after the coated iron ore powder particles have been reduced in the fluidized bed reducing reactor (3) they are passed into a smelt reduction furnace (4), and wherein the gases produced in the smelt reduction furnace (4) are mixed with the gases produced by the thermal cracking in the fluidized bed cracking and coating reactor (2) and fed as a reducing agent into the fluidized bed reducing reactor (3).

2. Method according to claim 1 characterized in that,

the pyrolysis of the coal is performed in the fluidized bed pyrolysing reactor (1) within the temperature range of 450 to 700°C,

the thermal cracking is performed in the fluidized bed cracking and coating reactor (2) within the temperature range of 450 to 850°C, and that

the reduction in the fluidized bed reducing reactor (3) is performed within the temperature range of 800 to 1100°C,

while the pressure within the three fluidized bed reactors (1, 2, 3) is kept within the pressure range of 0 to 7 bar (kg/cm$^2$).

3. Method according to claim 2, characterized in that the pyrolysis temperature in the reactor (1) is 500 to 600°C.

4. Method according to claim 2, characterized in that the thermal cracking temperature in the reactor (2) is 650 to 800°C.

5. Method according to claim 2, characterized in that the thermal cracking temperature in the reactor (2) is 700 to 775°C.

6. Method according to claim 2, characterized in that the reduction temperature in the reactor (3) is 850 to 1100°C.

7. Method according to claim 2, characterized in that the reduction temperature in the reactor (3) is 850 to 950°C.

8. Method according to claim 2, characterized in that the pressure within the three fluidized bed reactors (1, 2, 3) is kept within the pressure range of 3 to 5 bar (kg/cm$^2$).

9. Method according to one of the preceding claims, characterized in that the residue from the pyrolysis of coal within the fluidized bed pyrolysing reactor (1) is supplied as a source of gas into the smelt reduction furnace (4).

10. Method according to one of the preceding claims, characterized in that the gases generated by thermal cracking within the fluidized bed cracking and coating reactor (2) are steam-reformed.

11. Method according to one of the preceding claims, characterized in that the amount of carbonaceous material deposited on the surface of the iron ore particles within the fluidized bed cracking and coating reactor (2) is 2 to 10 wt % as compared to the total weight of the iron ore particles.

12. Apparatus for performing the method according to one of the claims 1 to 11, comprising a fluidized bed pyrolysing reactor (1) for the pyrolysis of coal, a fluidized bed cracking and coating reactor (2) for the thermal cracking of the tar and gas produced by the fluidized bed pyrolysing reactor (1) and for coating iron ore powder particles, a fluidized bed reducing reactor (3) for reducing the coated iron ore powder particles, and a smelt reduction furnace (4), wherein the pyrolysing reactor (1) and the cracking and coating reactor (2) communicate via a line comprising a cyclone (7) and wherein the reducing reactor (3) communicates via gas lines to the cracking and coating reactor (2) and to the furnace (4), which gas lines unify prior to entrance into the reducing reactor (3) and comprises mixer and reformer units (5, 6).

**Patentansprüche**

1. Verfahren zur Herstellung von Eisen durch Fluidbett-Reduktion von Eisenerz mit Hilfe von Kohlenwasserstoffen, wobei die Kohlenwasserstoffe gecrackt und dadurch die gebildeten kohlenstoffartigen bzw. kohlenstoffhaltigen Materialien auf der Oberfläche von Pulverteilchen des Eisenerzes innerhalb des Fluidbettreaktors (2) niedergeschlagen werden, während innerhalb eines anderen Fluidbettreaktors (3) die beschichteten Eisenerzpulverteilchen mit Hilfe eines Reduziermittels in Form eines Gases reduziert werden, dadurch gekennzeichnet, daß noch ein weiterer Fluidbettreaktor (1) vorgesehen ist, worin Kohle pyrolysiert wird, so daß gasförmige Produkte gebildet werden, die in den Fluidbett-Crack- und -Beschichtungsreaktor (2) eingespeist werden, und daß die beschichteten Eisenerzpulverteilchen nach dem Reduzieren im Fluidbett-Reduzierreaktor (3) in einen Schmelzreduktionsofen (4) geleitet werden, und wobei die im Schmelzreduktionsofen (4) erzeugten Gase mit den durch thermische Crackung im Fluidbett-Crack- und -Beschichtungsreaktor (2) erzeugten Gasen gemischt und als Reduziermittel zum Fluidbett-Reduzierreaktor (3) gleitet werden.

2. Verfahren nach Anspruch 1, dadurch gekennzeichnet, daß

die Pyrolyse der Kohle im Fluidbett-Pyrolysereaktor (1) innerhalb des Temperaturbereiches von 450 bis 700°C ausgeführt wird,

die thermische Crackung im Fluidbett-Crack- und -Beschichtungsreaktor (2) innerhalb des Temperaturbereichs von 450 bis 850°C ausgeführt wird, und daß

die Reduktion im Fluidbett-Reduzierreaktor (3) innerhalb des Temperaturbereichs von 800 bis 1100°C ausgeführt wird,

während der Druck innerhalb der drei Fluidbettreaktoren (1, 2, 3) innerhalb des Druckbereichs von 0 bis 7 bar (kg/cm$^2$) gehalten wird.

3. Verfahren nach Anspruch 2, dadurch gekennzeichnet, daß die Pyrolysetemperatur im Reaktor (1) 500 bis 600°C beträgt.

4. Verfahren nach Anspruch 2, dadurch gekennzeichnet, daß die thermische Cracktemperatur im Reaktor(2) 650 bis 800°C beträgt.

5. Verfahren nach Anspruch 2, dadurch gekennzeichnet, daß die thermische Cracktemperatur im Reaktor (2) 700 bis 775°C beträgt.

6. Verfahren nach Anspruch 2, dadurch gekennzeichnet, daß die Reduktionstemperatur im Reaktor (3) 850 bis 1100°C beträgt.

7. Verfahren nach Anspruch 2, dadurch gekennzeichnet, daß die Reduktionstemperatur im Reaktor (3) 850 bis 950°C beträgt.

8. Verfahren nach Anspruch 2, dadurch gekennzeichnet, daß der Druck innerhalb der drei Fluidbettreaktoren (1, 2, 3) innerhalb des Druckbereiches von 3 bis 5 bar (kg/cm$^2$) gehalten wird.

9. Verfahren nach einem der vorhergehenden Ansprüche, dadurch gekennzeichnet, daß der Rückstand aus der Pyrolyse der Kohle im Fluidbett-Pyrolysereaktor (1) als Quelle des Gases in den Schmelz-Reduktionsofen (4) eingebracht wird.

10. Verfahren nach einem der vorhergehenden Ansprüche, dadurch gekennzeichnet, daß die durch thermische Crackung innerhalb des Fluidbett-Crack- und -Beschichtungsreaktors (2) erzeugten Gase dampfreformiert werden.

11. Verfahren nach einem der vorhergehenden Ansprüche, dadurch gekennzeichnet, daß die Menge des kohlenstoffhaltigen bzw. kohlenstoffartigen Materials, niedergeschlagen auf der Oberfläche der Eisenerzteilchen innerhalb des Fluidbett-Crack- und -Beschichtungsreaktors (2) 2 bis 10 Gew.% beträgt, bezogen auf das Gesamtgewicht der Eisenerzteilchen.

12. Vorrichtung zur Durchführung des Verfahrens gemäß einem der Ansprüche 1 bis 11, gekennzeichnet durch einen Fluidbett-Pyrolysereaktor (1) für die Pyrolyse von Kohle, einen Fluidbett-Crack- und -Beschichtungsreaktor (2) für die thermische Crackung von Teer und Gas, erzeugt durch den Fluidbett-Pyrolysereaktor (1) und für die Beschichtung von Eisenerzpulverteilchen, einen Fluidbett-Reduzierreaktor (3) zum Reduzieren der beschichteten Eisenerzpulverteilchen, und einen Schmelz-Reduktionsofen (4), wobei der Pyrolysereaktor (1) und der Crackund -Beschichtungsreaktor (2) über eine Leitung unter Einschluß eines Cyclons (7) in Verbindung stehen und wobei der Reduzierreaktor (3) über Gasleitungen zum Crack- und -Beschichtungsreaktor (2) und zum Ofen (4) in Verbindung steht und sich die Gasleitungen vor dem Eintritt in den Reduzierreaktor (3) vereinigen und Mischerund Reformereinheiten (5, 6) aufweisen.

**Revendications**

1. Procédé de fabrication de fer par réduction en lit fluidisé de minerai de fer à l'aide d'hydrocarbures, conformément auquel les hydrocarbures sont craqués et les matières carbonées ainsi formées sont déposées sur la surface de particules de poudre du minerai de fer dans un réacteur à lit fluidisé (2), cependant que, dans un autre réacteur à lit fluidisé (3), les particules de poudre de mineraide fer enrobées sont réduites par l'intermédiaire d'un agent réducteur sous forme d'un gaz, caractérisé en ce que on prévoit encore un autre réacteur à lit fluidisé (1) dans lequel du charbon est pyrolysé de façon à engendrer des produits gazeux qui sont introduits dans le réacteur de craquage et d'enrobage à lit fluidisé (2) et en ce qu'après que les particules de poudre de minerai de fer enrobées ont été réduites dans le réacteur de réduction à lit fluidisé (3), elles sont amenées à passer dans un four de réduction à l'état fondu (4), où les gaz produits dans le four de réduction à l'état fondu (4) sont mélangés au gaz engendrés par le craquage thermique dans le réacteur d'enrobage et de craquage à lit fluidisé (2) et introduits, à titre d'agent réducteur, dans le réacteur de réduction à lit fluidisé (3).

2. Procédé suivant la revendication 1, caractérisé en ce que

l'on réalise la pyrolyse du charbon dans le réacteur de pyrolyse à lit fluidisé (1) dans la plage des températures de 450 à 700°C,

on réalise le craquage thermique dans le réacteur d'enrobage et de craquage à lit fluidisé (2) dans la plage des températures de 450 à 850°C et

on réalise la réduction dans le réacteur de réduction à lit fluidisé (3) dans la plage des températures de 800 à 1100°C,

cependant que l'on maintient la pression dans les trois réacteurs à lit fluidisé (1, 2, 3) dans la plage des températures de 0 à 7 bars (kg/cm$^2$).

3. Procédé suivant la revendication 2, caractérisé en ce que la température de pyrolyse dans le réacteur (1) varie de 500 à 600°C.

4. Procédé suivant la revendication 2, caractérisé en ce que la température de craquage thermique dans le réacteur (2) varie de 650 à 800°C.

5. Procédé suivant la revendication 2, caractérisé en ce que la température de craquage thermique dans le réacteur (2) varie de 700 à 775°C.

6. Procédé suivant la revendication 2, caractérisé en ce que la température de réduction dans le réacteur (3) varie de 850 à 1100°C.

7. Procédé suivant la revendication 2, caractérisé en ce que la température de réduction dans le réacteur (3) varie de 850 à 950°C.

8. Procédé suivant la revendication 2, caractérisé en ce que la pression dans les trois réacteurs à lit fluidisé (1, 2, 3) est maintenue dans la plage des pressions de 3 à 5 bars (kg/cm$^2$).

9. Procédé suivant l'une quelconque des revendications précédentes, caractérisé en ce que le résidu de la pyrolyse du charbon dans le réacteur de pyrolyse à lit fluidisé (1) est fourni, à titre de source de gaz, au four de réduction à l'état fondu (4).

10. Procédé suivant l'une quelconque des revendications précédentes, caractérisé en ce que les gaz engendrés par le craquage thermique dans le réacteur d'enrobage et de craquage à lit fluidisé (2) sont soumis à un reformage à la vapeur d'eau.

11. Procédé suivant l'une quelconque des revendications précédentes, caractérisé en ce que la quantité de matière carbonée déposée sur la surface des particules du minerai de fer dans le réacteur d'enrobage et de craquage à lit fluidisé (2) varie de 2 à 10% en poids, par rapport au poids total des particules du minerai de fer.

12. Appareil de mise en oeuvre du procédé suivant l'une quelconque des revendications 1 à 11, comprenant un réacteur de pyrolyse à lit fluidisé (1) pour la pyrolyse de charbon, un réacteur d'enrobage et de craquage à lit fluidisé (2) pour le craquage thermique du goudron et du gaz produits par le réacteur de pyrolyse à lit fluidisé (1) et pour l'enrobage de particules de poudre de minerai de fer, un réacteur de réduction à lit fluidisé (3) pour la réduction des particules de poudre de minerai de fer enrobées et un four de réduction à l'état fondu (4), où le rèacteur de pyrolyse (1) et le réacteur d'enrobage et de craquage (2) communiquent par l'intermédiaire d'une conduite comprenant un cyclone (7) et où le réacteur de rèduction (3) communique par l'intermédiaire de conduites de gaz avec le réacteur d'enrobage et de craquage (2) et le four (4), lesquelles conduites de gaz se réunissement avant de pénétrer dans le réacteur de réduction (3) et comprennent des unités de mélange et de reformage (5, 6).

FIGURE 1

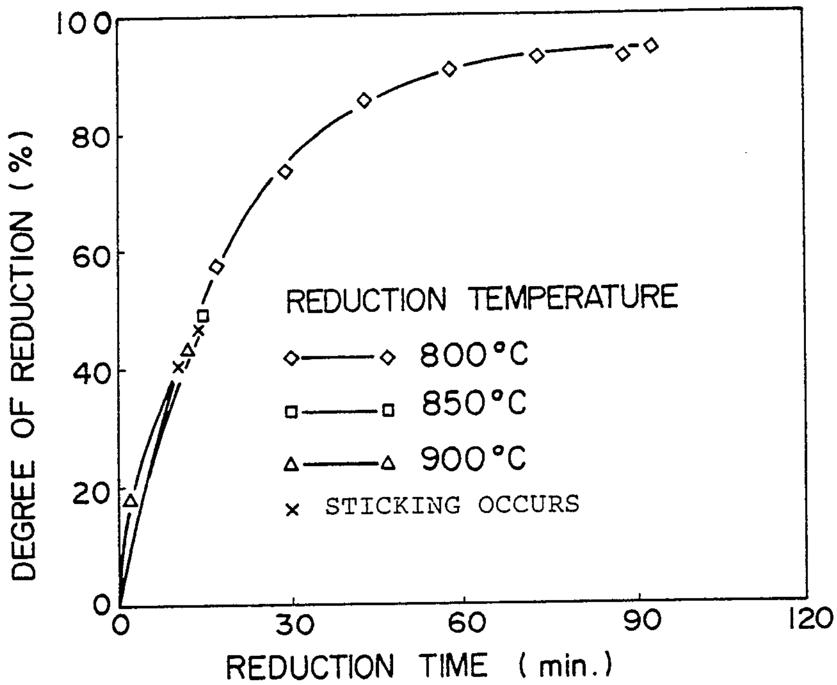


FIGURE 2

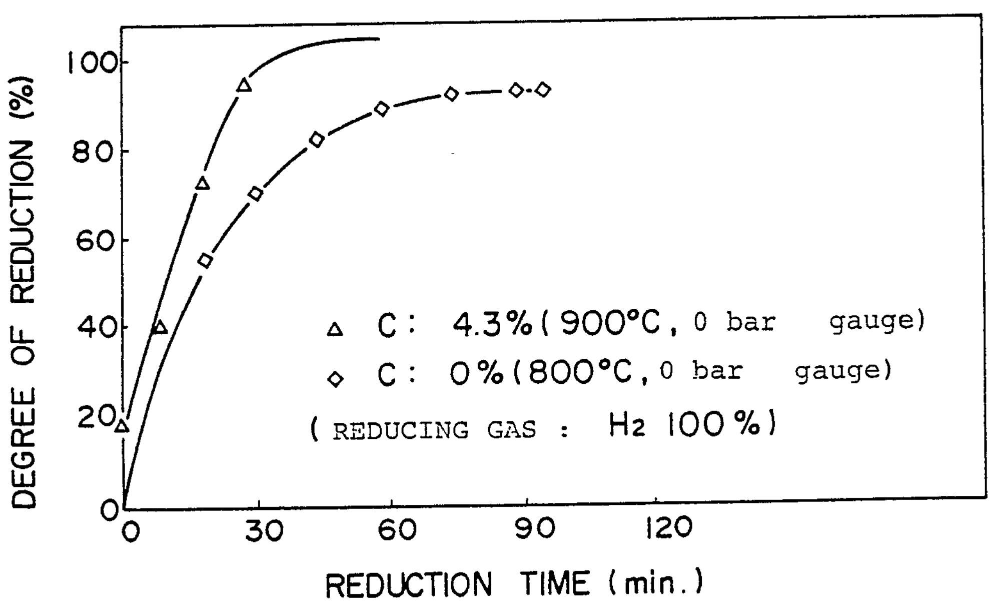

FIGURE 3

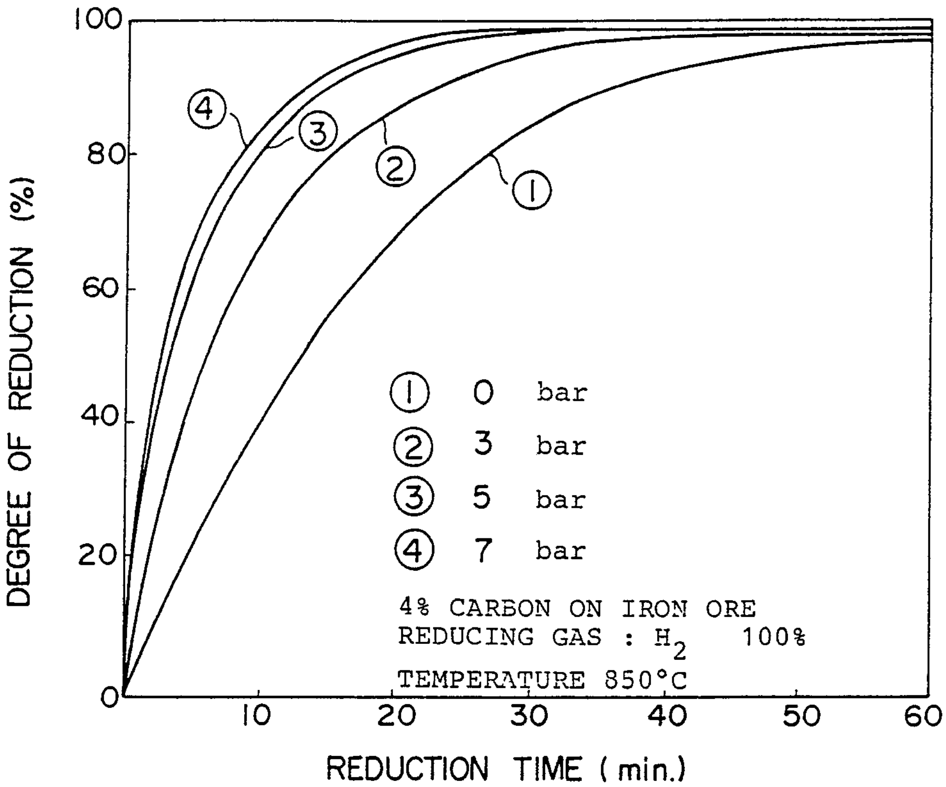


FIGURE 4

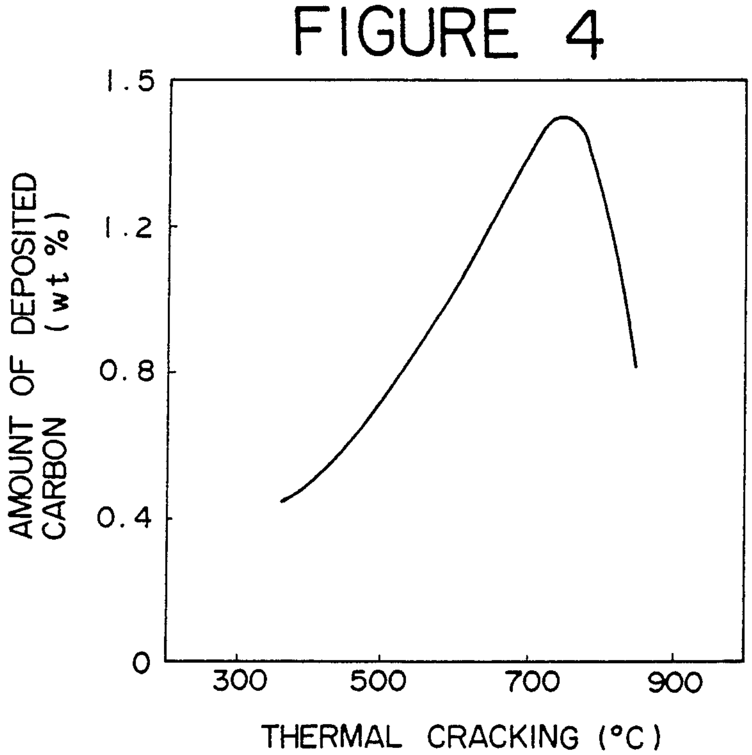

FIGURE 5